# EUROPÄISCHE PATENTSCHRIFT

(11) **EP 1 213 080 B1**
(45) Veröffentlichungstag und Bekanntmachung des Hinweises auf die Patenterteilung: **23.07.2008**
(21) Anmeldenummer: 01124765.7
(22) Anmeldetag: 17.10.2001
(51) Int. Cl.: B23D 77/00

(54) **Werkzeug zur spanabtragenden Bearbeitung von Bohrungsoberflächen**
Boring tool
Outil de forage

(30) Priorität: 17.11.2000 DE 10058226
(43) Veröffentlichungstag der Anmeldung: 12.06.2002
(73) Patentinhaber: MAPAL Fabrik für Präzisionswerkzeuge Dr. Kress KG, D-73431 Aalen (DE)
(72) Erfinder: Kress, Dieter Dr., 73431 Aalen (DE); Häberle, Friedrich, 73466 Lauchheim (DE)
(74) Vertreter: Gleiss, Alf-Olav

(56) Entgegenhaltungen:
- CH-A- 494 611
- US-A- 4 948 305

## Beschreibung

Die Erfindung betrifft ein Werkzeug zur spanabtragenden Bearbeitung von Bohrungsoberflächen gemäß Oberbegriff des Anspruchs 1.

Werkzeuge der hier angesprochenen Art, nämlich Bohrer und Reibahlen, sind bekannt (US-A-4 948 305). Es hat sich herausgestellt, dass insbesondere bei der Bearbeitung von Bohrungsoberflächen in Werkstücken aus gehärtetem Stahl die Schneiden des Werkzeugs ausbrechen und/oder bei der Bearbeitung ein Rattern eintritt, so dass die Bohrungsoberfläche nicht das gewünschte Maß und die angestrebte Oberflächengüte aufweist.

Es ist daher Aufgabe der Erfindung, ein Werkzeug der eingangs genannten Art zu schaffen, das diese Nachteile nicht aufweist.

Zur Lösung dieser Aufgabe wird ein Werkzeug vorgeschlagen, das die in Anspruch 1 genannten Merkmale zeigt.

Bei einem bevorzugten Ausführungsbeispiel des Werkzeugs ist mindestens ein weiteres Paar Schneiden vorgesehen. Bei einem Werkzeug mit sechs Schneiden sind dabei die Schneiden eines ersten Paares symmetrisch zueinander angeordnet und die des zweiten und/oder dritten Paares asymmetrisch, wie dies oben erläutert wurde. Ein Ausbrechen der Schneiden und ein Rattern des Werkzeugs werden auf diese Weise ebenfalls sicher vermieden.

Weitere vorteilhafte Ausführungsformen des Werkzeugs ergeben sich aus Kombinationen der aus den Unteransprüchen hervorgehenden Merkmale.

Die Erfindung wird im Folgenden anhand der Zeichnung näher erläutert. Es zeigen:
- Figur 1: eine stark schematisierte Draufsicht auf die Stirnseite eines Werkzeugs mit vier Schneiden;
- Figur 2: eine Seitenansicht des vorderen Teils des in Figur 1 dargestellten Werkzeugs;
- Figur 3: eine stark schematisierte Draufsicht auf die Stirnseite eines zweiten Ausführungsbeispiels eines Werkzeugs;
- Figur 4a: eine Seitenansicht eines ersten Ausführungsbeispiels einer Messerplatte und
- Figur 4b: eine Seitenansicht eines zweiten Ausführungsbeispiels einer Messerplatte.

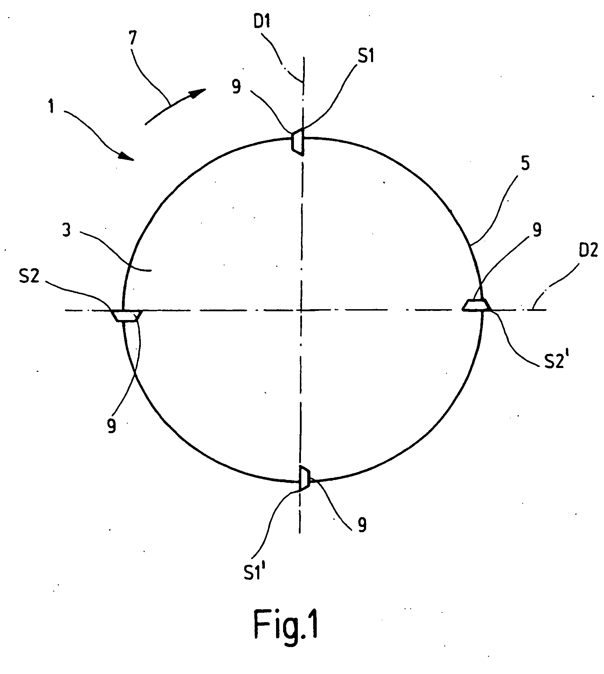

Die Draufsicht gemäß Figur 1 zeigt ein Werkzeug 1, dessen Grundkörper 3 durch eine Kreislinie 5 angedeutet ist. Der Grundkörper ist mit vier Schneiden versehen, die paarweise zueinander angeordnet sind. Die Schneiden S1 und S1' eines ersten Schneidenpaares sind oben und unten am Werkzeug 1 vorgesehen. Sie liegen auf einer gedachten Durchmesserlinie D1, die senkrecht auf einer zweiten gedachten Durchmesserlinie D2 liegt. Auf dieser sind die Schneiden S2 und S2' eines zweiten Schneidenpaares angeordnet.

Bei der Bearbeitung einer Bohrungsoberfläche eines Werkstücks wird eine Relativbewegung zwischen den Schneiden S1, S1', S2, S2' und der Bohrungsoberfläche dadurch erzeugt, dass das Werkzeug 1 gegenüber dem Werkstück in Rotation versetzt wird oder dieses sich gegenüber dem feststehenden Werkzeug dreht. Denkbar ist natürlich auch, dass sich Werkzeug und Werkstück drehen. Wesentlich ist die Relativbewegung zwischen den Schneiden und der Bohrungsoberfläche. Hier wird davon ausgegangen, dass sich das Werkzeug 1 gegenüber dem feststehenden Werkstück dreht und zwar in Richtung des Pfeils 7, also im Uhrzeigersinn. Die über die Außenfläche des Grundkörpers 3 hervorragenden Schneiden S1, S1', S2 und S2' tragen von der Bohrungsoberfläche Späne ab, die aus der Bohrung auf übliche Weise herausgeführt werden. Um einen Spanstau zu vermeiden, ist -in Drehrichtung gesehen- vor jeder Schneide eine hier nicht dargestellte Ausnehmung im Grundkörper 3 des Werkzeugs 1 vorgesehen, der Spanraum. Die Funktionsweise eines derartigen Werkzeugs ist bekannt, daher wir hier nicht näher darauf eingegangen.

Die Schneiden S1, S1', S2 und S2' können Teil des Grundkörpers 3 des Werkzeugs 1 sein. Es ist also möglich, die Schneiden aus dem Vollen herauszuarbeiten. Bei dem hier dargestellten Ausführungsbeispiel sind die Schneiden jedoch jeweils Teil einer Messerplatte 9, die auf geeignete Weise am Grundkörper 3 des Werkzeugs 1 befestigt sind. In der Regel werden die Messerplatten 9 in im Wesentlichen in Längsrichtung des Werkzeugs 1 verlaufende Nuten im Grundkörper 3 eingesetzt und dort festgelötet oder mittels einer geeigneten Spannvorrichtung, insbesondere Spannpratze, gehalten. Es ist auch möglich, die Messerplatten unmittelbar mit einer Schraube am Grundkörper 3 zu befestigen.

Für die weiteren Betrachtungen ist es irrelevant, ob die Schneiden unmittelbar Teil des Grundkörpers 3 sind oder an Messerplatten 9 realisiert sind, die in Figur 1, aber auch in den folgenden Figuren angedeutet sind.

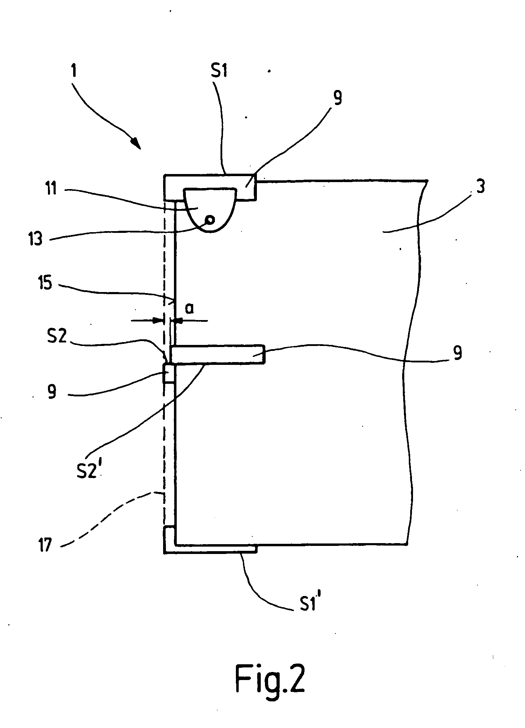

Figur 2 zeigt das in Figur 1 wiedergegebene Werkzeug 1 in Seitenansicht. Gleiche Teile sind mit gleichen Bezugsziffern versehen, so dass insofern auf die Beschreibung zu Figur 1 verwiesen wird.

Die Seitenansicht zeigt die obere Schneide S1 und die diametral gegenüberliegende Schneide S1' des ersten Schneidenpaares. In Figur 2 ist angedeutet, dass die der Schneide S1 zugeordnete Messerplatte 9 mittels einer als Spannpratze ausgebildeten Spannvorrichtung gehalten wird, die mittels einer Spannschraube 13 am Grundkörper 3 des Werkzeugs 1 befestigt ist. Auf die Darstellung weiterer Spannpratzen wurde hier, wie in Figur 1 aus Gründen der Übersichtlichkeit verzichtet.

Die Seitenansicht gemäß Figur 2 zeigt eine Messerplatte 9 mit der Schneide S2' des zweiten Schneidenpaares in Draufsicht. Es ist hier auch der vorderste Teil der über die Stirnseite 15 hinausragenden Messerplatte 9 mit der Schneide S2 erkennbar. Die beiden Schneiden S2 und S2' liegen, wie hier ersichtlich, exakt diametral einander gegenüber. Während jedoch die Messerplatte 9 der Schneide S2 bis an die Linie 17 heranragt, springt die Messerplatte 9 der Schneide S2' gegenüber dieser Linie 17 zurück. Die Messerplatte 9 der Schneide S2' ragt also nicht so weit über die Stirnseite 15 des Grundkörpers 9 hinaus, wie dies bei der Messerplatte 9 der Schneide S2 der Fall ist.

Aus der Darstellung gemäß Figur 2 ist ersichtlich, dass die Messerplatten 9 der Schneiden S1 und S1' beide exakt bis zur Linie 17 reichen, also gleich weit über die Stirnseite 15 hinausragen. Sie liegen, wie anhand von Figur 1 gezeigt und erläutert, exakt auf einer Durchmesserlinie D1. Die beiden Schneiden S1 und S1' des ersten Schneidenpaares liegen also symmetrisch zueinander.

Demgegenüber liegen zwar die Schneiden S2 und S2' des zweiten Schneidenpaares exakt auf einer Durchmesserlinie D2. Sie ragen jedoch unterschiedlich weit über die Stirnseite 15 des Grundkörpers 3 des Werkzeugs 1 hinaus. Sie sind also -in axialer Richtung des Werkzeugs 1 gesehen- zueinander versetzt. Damit sind die Schneiden S2 und S2' des zweiten Schneidenpaares asymmetrisch zueinander angeordnet.

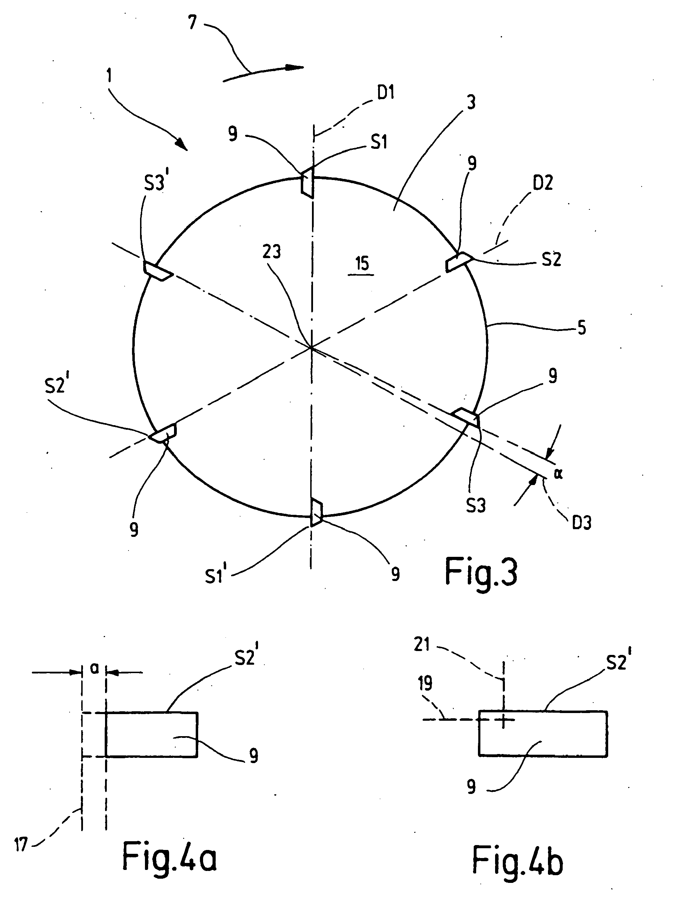

Figur 3 zeigt stark schematisiert eine Draufsicht auf ein zweites Ausführungsbeispiel eines Werkzeugs 1. Gleiche Teile sind mit gleichen Bezugsziffern versehen, wie sie anhand der Figuren 1 und 2 verwendet wurden. Es wird insofern auf die Beschreibung zu diesen Figuren verwiesen.

Das in Figur 3 dargestellte Werkzeug unterscheidet sich von dem oben erläuterten dadurch, dass drei Schneidenpaare S1 und S1', S2 und S2' sowie S3 und S3' vorgesehen sind. Die Schneiden S1, S1' des ersten Schneidenpaares liegen auf einer ersten Durchmesserlinie D1, die Schneiden S2, S2' des zweiten Schneidenpaares auf einer Durchmesserlinie D2. Bei dem dritten Schneidenpaar S3 und S3' ist ersichtlich, dass zwar die Schneide S3' auf der Durchmesserlinie D3 liegt, dass jedoch die Schneide S3 um einen Winkel α gegenüber der Durchmesserlinie D3 versetzt angeordnet ist, und zwar in Richtung der durch den Pfeil 7 dargestellten Drehrichtung des Werkzeugs 1 gesehen, gegenüber der Durchmesserlinie D3 nacheilt. Es ist jedoch auch möglich, die Schneide S3 voreilend anzuordnen, also quasi spiegelbildlich zur Durchmesserlinie D3.

Bei dem in Figur 3 dargestellten Ausführungsbeispiel des Werkzeugs 1 ist also zunächst vorgesehen, dass das Schneidenpaar S1 und S1' sowie S2 und S2' symmetrisch angeordnet ist, also exakt auf einer Durchmesserlinie D1, D2 liegt und -in axialer Richtung des Werkzeugs 1 gesehen- gleich weit über die Stirnseite 15 des Grundkörpers 3 hinausragen. Nur das dritte Schneidenpaar S3 und S3' ist asymmetrisch angeordnet, nämlich dadurch, dass die Schneide S3 gerade nicht auf der Durchmesserlinie D3 liegt, auf der die Schneide S3' angeordnet ist.

Es ist jedoch auch möglich, das zweite Schneidenpaar S2, S2' ebenfalls asymmetrisch auszubilden, sei es dadurch, dass es, wie anhand von Figur 2 erläutert, in axialer Richtung versetzt ist, oder aber dadurch, dass auch hier eine der Schneiden, anders als in Figur 3 dargestellt, nicht auf der Durchmesserlinie D2 angeordnet ist.

Es ist im Übrigen möglich, die anhand der Figuren 2 und 3 erläuterte Asymmetrie zu kombinieren und zwar dergestalt, dass beispielsweise bei dem Ausführungsbeispiel gemäß Figur 3 das zweite Schneidenpaar in axialer Richtung versetzt ist, wie anhand von Figur 2 erläutert, und das dritte Schneidenpaar gegenüber der Durchmesserlinie D3 versetzt ist. Schließlich ist es denkbar, die Asymmetrie eines Schneidenpaares sowohl durch einen axialen Versatz als auch einen Versatz gegenüber der zugehörigen Durchmesserlinie zu bewirken.

Bei der Darstellung gemäß Figur 2 wurde davon ausgegangen, dass die Messerplatte 9, die der Schneide S2' zugeordnet ist, im Grundkörper 3 des Werkzeugs 1 in axialer Richtung nach rechts verlagert wurde. Es ist aber auch möglich, die Vorderseite der Messerplatte, also die über die Stirnseite 15 hinausragende Seite der Messerplatte abzutragen. Diese Möglichkeit ist in Figur 4a dargestellt, die eine Messerplatte 9 zeigt, der beispielhaft die Schneide S2' zugeordnet ist. Die Schneide S2' springt gegenüber der gedachten Linie 17, die auch in Figur 2 dargestellt ist, dadurch zurück, dass ein Teil der Schneide abgeschliffen wird, so dass die Schneide S2' um den Betrag a verkürzt wird.

In Figur 4b ist ein abweichendes Ausführungsbeispiel der Messerplatte 9 mit der Schneide S2' dargestellt. Durch gestrichelte Linien 19 und 21 ist angedeutet, dass die linke obere Ecke der Messerplatte 9 abgetragen werden kann, wodurch ebenfalls die Schneide S2' in axialer Richtung um den Betrag a verkürzt wird.

Die axiale Asymmetrie zweier Schneiden eines Schneidenpaares lässt sich also auf verschiedene Weise realisieren:

In dem Fall, in dem eine Schneide Teil des Grundkörpers 3 eines Werkzeugs 1 ist, kann der Grundkörper 3 im Bereich der entsprechenden Schneide, beispielsweise im Bereich der Schneide S2', ähnlich wie in Figur 4a dargestellt, abgetragen werden. Es ist jedoch auch möglich, einen Teil der Schneide abzutragen, was anhand von Figur 4b erläutert wurde.

In dem Fall, in dem die Schneiden durch eine Messerplatte 9 realisiert werden, kann ein axialer Versatz der entsprechenden Schneide dadurch realisiert werden, dass die Messerplatte, wie anhand von Figur 2 erläutert, im Grundkörper in axialer Richtung versetzt angeordnet wird, so dass diese nicht mehr so weit über die Stirnseite 15 des Grundkörpers 3 hinaussteht, wie dies die anderen Schneiden tun. Dieser Versatz der Messerplatte ist sowohl in dem Fall möglich, in dem die Messerplatte in den Grundkörper 3 eingelötet ist, aber auch in dem Fall, in dem die Messerplatte 9 durch eine Spannpratze 11 am Grundkörper 3 festgespannt wird.

Schließlich ist es, wie anhand der Figuren 4a und 4b möglich, auch bei Realisierung einer Schneide mittels einer Messerplatte 9 möglich, die aktive Schneide einer Messerplatte 9 dadurch zu verlagern, dass diese in axialer Richtung abgetragen wird. Dabei kann die gesamte Messerplatte abgeschliffen werden, wie dies anhand von Figur 4a erläutert wurde, oder nur ein kleiner im Bereich der Schneide liegender Teil der Messerplatte, was anhand von Figur 4b gezeigt wurde.

Wird eine Asymmetrie der Schneiden eines Schneidenpaares, wie anhand von Figur 2 erläutert, angestrebt, so ist also eine Verlagerung der zugehörigen Messerplatte um eine Strecke a möglich. Die Asymmetrie ist jedoch auch durch einen Schleifvorgang realisierbar, bei dem die Schneide um den Bereich a verkürzt wird (siehe Figur 4a, 4b). Die axiale Asymmetrie, also der Wert a, kann im Bereich von 0,5/10 mm bis 8/10 mm liegen. Vorzugsweise wird ein axialer Versatz a von 1/10 mm bis 5/10 mm gewählt. Besonders bewährt hat sich jedoch ein axialer Versatz a von circa 2/10 mm.

Bei einer Asymmetrie durch Verlagerung einer Schneide eines Schneidenpaares gegenüber der zugehörigen Durchmesserlinie, wie dies anhand von Figur 3 erläutert wurde, wird ein vom Mittelpunkt 23 des Werkzeugs 1 ausgemessener spitzer Winkel α gewählt, der im Bereich von 0,5° bis 10° vorzugsweise von 2° bis 7° gewählt. Besonders bewährt hat sich ein Versatz um den Winkel α bewährt, der circa 5° beträgt.

Die durch einen axialen Versatz der Schneiden eines Schneidenpaares gegebene Asymmetrie kann bei bestehenden Werkzeugen auch nachträglich erzeugt werden. Damit ist es möglich, das Ausbrechen von Schneiden und ein Rattern des Werkzeugs auch bei bestehenden Werkzeugen zu vermeiden.

Nach allem zeigt sich, dass bei Werkzeugen mit paarweise angeordneten Schneiden auf einfache Weise, nämlich durch Erzeugung einer Asymmetrie mindestens eines Schneidenpaares Nachteile, wie sie bei bekannten Werkzeugen gegeben sind, vermieden werden können, auch und insbesondere bei der Bearbeitung von Werkstücken aus gehärtetem Stahl. Dabei können, wie anhand des Werkzeugs in Figur 3 erläutert wurde, auch mehr als ein Schneidenpaar asymmetrisch angeordnet sein. Schließlich ist es denkbar, die Asymmetrie nicht nur durch einen Winkelversatz sondern auch durch einen axialen Versatz bei ein und demselben Schneidenpaar zu realisieren. Letztlich sei noch darauf hingewiesen, dass die hier beschriebene Asymmetrie auch bei Werkzeugen realisiert werden kann, die mehr als sechs Schneiden aufweisen.

Die anhand der Figuren erläuterten Werkzeuge können noch mit Führungsleisten versehen sein, die in den Grundkörper 3 des Werkzeugs 1 eingesetzt sind und in axialer Richtung verlaufen und vorzugsweise länger sind, als die Schneiden, die hier erläutert wurden. Dabei ist es möglich, jeder Schneiden eine Führungsleiste zuzuordnen oder nur einigen davon. Es ist überdies denkbar, dass Führungsleisten vorgesehen werden, die symmetrisch zueinander angeordnet sind und/oder solche, die in dem hier beschriebenen Sinne asymmetrisch zueinander positioniert sind.

## Patentansprüche

1. Werkzeug (1) zur spanabtragenden Bearbeitung von Bohrungsoberflächen, mit mindestens vier Schneiden, die paarweise einander zugeordnet sind, wobei ein Paar Schneiden - in axialer Richtung des Werkzeugs (1) gesehen - versetzt zueinander angeordnet sind und ein erstes Paar Schneiden (S1,S1') diametral gegenüberliegend angeordnet sind, **dadurch gekennzeichnet, dass** das erste Paar Schneiden (S1,S1') - in axialer Richtung des Werkzeugs (1) gesehen - an gleicher Position angeordnet sind.

2. Werkzeug nach Anspruch 1, **dadurch gekennzeichnet, dass** ein zweites Paar Schneiden (S2,S2') nicht exakt diametral gegenüberliegend angeordnet sind.

3. Werkzeug nach einem der vorhergehenden Ansprüche, **dadurch gekennzeichnet, dass** das zweite Paar Schneiden (S2,S2') -in axialer Richtung des Werkzeugs (1) gesehen- versetzt zueinander angeordnet sind.

4. Werkzeug nach einem der vorhergehenden Ansprüche, **dadurch gekennzeichnet, dass** mindestens ein weiteres, drittes Paar Schneiden (S3,S3') vorgesehen ist.

5. Werkzeug nach Anspruch 4, **dadurch gekennzeichnet, dass** die Schneiden (S3,S3') des dritten Schneidenpaares ebenfalls nicht exakt diametral gegenüberliegend angeordnet sind.

6. Werkzeug nach Anspruch 4 oder 5, **dadurch gekennzeichnet, dass** die Schneiden (S3,S3') des dritten Schneidenpaares -in axialer Richtung des Werkzeugs (1) gesehen- versetzt zueinander angeordnet sind.

7. Werkzeug nach einem der vorhergehenden Ansprüche, **dadurch gekennzeichnet, dass** eine Schneide des zweiten Paares (S2,S2') um einen Winkel (α) von 0,5° bis 10°, vorzugsweise von 2° bis 7°, insbesondere von circa 5° gegenüber einer gedachten Durchmesserlinie (D2;D3) versetzt ist.

8. Werkzeug nach einem der vorhergehenden Ansprüche, **dadurch gekennzeichnet, dass** eine Schneide des dritten Paares (S3,S3') um einen Winkel (α) von 0,5° bis 10°, vorzugsweise von 2° bis 7°, insbesondere von circa 5° gegenüber einer gedachten Durchmesserlinie (D2;D3) versetzt ist.

9. Werkzeug nach einem der vorhergehenden Ansprüche, **dadurch gekennzeichnet, dass** eine Schneide des zweiten Paares (S2,S2') - in axialer Richtung des Werkzeugs (1) gesehen- um 0,5/10 mm bis 8/10 mm, vorzugsweise um 1/10 mm bis 5/10 mm, insbesondere um circa 2/10 mm versetzt ist.

10. Werkzeug nach einem der vorhergehenden Ansprüche, **dadurch gekennzeichnet, dass** eine Schneide des dritten Paares (S3,S3')-in axialer Richtung des Werkzeugs (1) gesehen- um 0,5/10 mm bis 8/10 mm, vorzugsweise um 1/10 mm bis 5/10 mm, insbesondere um circa 2/10 mm versetzt ist.

11. Werkzeug nach einem der vorhergehenden Ansprüche, **dadurch gekennzeichnet, dass** die Schneiden (S1,S1';S2,S2';S3,S3') durch in den Grundkörper (3) des Werkzeugs (1) einsetzbare Messerplatten (9) realisierbar sind.

12. Werkzeug nach einem der vorhergehenden Ansprüche, **dadurch gekennzeichnet, dass** die Messerplatten (9) in den Grundkörper (3) eingelötet und gegebenenfalls versetzt zueinander eingelötet sind.

13. Werkzeug nach einem der vorhergehenden Ansprüche, **dadurch gekennzeichnet, dass** die Messerplatten (9) im Grundkörper (3) mittels einer geeigneten Spannvorrichtung (11,13) fixierbar sind.

14. Werkzeug nach einem der vorhergehenden Ansprüche, **dadurch gekennzeichnet, dass** der in axialer Richtung des Werkzeugs (1) gesehene Versatz zweier Schneiden eines Paares durch Abschleifen einer Schneide realisierbar ist.

## Claims

1. Tool (1) for machining bore surfaces with at least four cutting edges which are associated in pairs, with one pair of cutting edges - seen in axial direction of the tool (1) - being staggered, and one first pair of cutting edges (S1, S1') arranged diametrically opposed, **characterized in that** the first pair of cutting edges (S1, S1') is arranged in the same position - seen in axial direction of the tool (1).

2. Tool according to claim 1, **characterized in that** a second pair of cutting edges (S2, S2') is not arranged exactly diametrically opposed.

3. Tool according to any one of the preceding claims, **characterized in that** the second pair of cutting edges (S2, S2') is staggered - seen in axial direction of the tool (1).

4. Tool according to any one of the preceding claims, **characterized in that** at least one additional, third pair of cutting edges (S3, S3') is provided.

5. Tool according to claim 4, **characterized in that** the cutting edges (S3, S3') of the third pair of cutting edges are also not arranged exactly diametrically opposed.

6. Tool according to claim 4 or 5, **characterized in that** the cutting edges (S3, S3') of the third pair of cutting edges are staggered - seen in axial direction of the tool (1).

7. Tool according to any one of the preceding claims, **characterized in that** one cutting edge of the second pair (S2, S2') is staggered by an angle (α) of 0.5° to 10°, preferably 2° to 7°, particularly approx. 5° versus an imaginary diameter line (D2; D3).

8. Tool according to any one of the preceding claims, **characterized in that** one cutting edge of the third pair (S3, S3') is staggered by an angle (α) of 0.5° to 10°, preferably 2° to 7°, particularly approx. 5° versus an imaginary diameter line (D2; D3).

9. Tool according to any one of the preceding claims, **characterized in that** one cutting edge of the second pair (S2, S2') is staggered by 0.5/10 mm to 8/10 mm, preferably 1/10 to 5/10 mm, particularly approx. 2/10 mm - seen in axial direction of the tool (1) .

10. Tool according to any one of the preceding claims, **characterized in that** one cutting edge of the third pair (S3, S3') is staggered by 0.5/10 mm to 8/10 mm, preferably 1/10 to 5/10 mm, particularly approx. 2/10 mm - seen in axial direction of the tool (1).

11. Tool according to any one of the preceding claims, **characterized in that** the cutting edges (S1, S1', S2, S2', S3, S3') can be realized by cutter plates (9) insertable into the basic body (3) of the tool (1).

12. Tool according to any one of the preceding claims, **characterized in that** the cutter plates (9) are soldered into the basic body (3) and, if necessary, staggered.

13. Tool according to any one of the preceding claims, **characterized in that** the cutter plates (9) can be fixed in the basic body (3) by means of a suitable chucking device (11, 13).

14. Tool according to any one of the preceding claims, **characterized in that** the offset - seen in axial direction of the tool (1) - of two cutting edges of a pair can be realized by grinding one cutting edge.

## Revendications

1. Outil (1) pour l'usinage de surfaces d'alésages par enlèvement de copeaux, comportant au moins quatre lames qui sont associées entre elles par paires, les lames d'une paire, vues dans le sens axial de l'outil (1), étant disposées de manière décalée l'une par rapport à l'autre et les lames (S1, S1') d'une première paire étant disposées de manière diamétralement opposée, **caractérisé en ce que** les lames (S1, S1') de la première paire, vues dans le sens axial de l'outil (1), sont situées à une même position.

2. Outil selon la revendication 1, **caractérisé en ce que** les lames (S2, S2') d'une deuxième paire ne sont pas disposées de manière exactement diamétralement opposée.

3. Outil selon l'une des revendications précédentes, **caractérisé en ce que** les lames (S2, S2') de la deuxième paire, vues dans le sens axial de l'outil (1), sont disposées de manière décalée l'une par rapport à l'autre.

4. Outil selon l'une des revendications précédentes, **caractérisé en ce qu'**au moins une autre troisième paire de lames (S3, S3') est prévue.

5. Outil selon la revendication 4, **caractérisé en ce que** les lames (S3, S3') de la troisième paire de lames ne sont pas non plus disposées de manière exactement diamétralement opposée.

6. Outil selon la revendication 4 ou 5, **caractérisé en ce que** les lames (S3, S3') de la troisième paire de lames, vues dans le sens axial de l'outil (1), sont disposées de manière décalée l'une par rapport à l'autre.

7. Outil selon l'une des revendications précédentes, **caractérisé en ce qu'**une lame de la deuxième paire (S2, S2') est décalée d'un angle (α) de 0,5° à 10°, de préférence de 2° à 7°, et plus particulièrement d'environ 5° par rapport à une ligne de diamètre imaginaire (D2; D3).

8. Outil selon l'une des revendications précédentes, **caractérisé en ce qu'**une lame de la troisième paire (S3, S3') est décalée d'un angle (α) de 0,5° à 10°, de préférence de 2° à 7°, et plus particulièrement d'environ 5° par rapport à une ligne de diamètre imaginaire (D2; D3).

9. Outil selon l'une des revendications précédentes, **caractérisé en ce qu'**une lame de la deuxième paire (S2, S2'), vue dans le sens axial de l'outil (1), est décalée de 0,5/10 mm à 8/10 mm, de préférence de 1/10 mm à 5/10 mm, et plus particulièrement d'environ 2/10 mm.

10. Outil selon l'une des revendications précédentes, **caractérisé en ce qu'**une lame de la troisième paire (S3, S3'), vue dans le sens axial de l'outil (1), est décalée de 0,5/10 mm à 8/10 mm, de préférence de 1/10 mm à 5/10 mm, et plus particulièrement d'environ 2/10 mm.

11. Outil selon l'une des revendications précédentes, **caractérisé en ce que** les lames (S1, S1'; S2, S2'; S3, S3') peuvent être réalisées par des plaquettes de coupe (9) insérables dans le corps de base (3) de l'outil (1).

12. Outil selon l'une des revendications précédentes, **caractérisé en ce que** les plaquettes de coupe (9) sont brasées dans le corps de base (3) et sont brasées de manière décalée l'une par rapport à l'autre, le cas échéant.

13. Outil selon l'une des revendications précédentes, **caractérisé en ce que** les plaquettes de coupe (9) peuvent être fixées dans le corps de base (3) au moyen d'un dispositif de serrage (11, 13) approprié.

14. Outil selon l'une des revendications précédentes, **caractérisé en ce que** le décalage de deux lames d'une paire, vu dans le sens axial de l'outil (1), est réalisable par meulage d'une lame.
